# EUROPÄISCHE PATENTSCHRIFT

(11) **EP 3 885 082 B1**
(45) Veröffentlichungstag und Bekanntmachung des Hinweises auf die Patenterteilung: **23.11.2022**
(21) Anmeldenummer: 20164918.3
(22) Anmeldetag: 23.03.2020
(51) Int. Cl.: B25J 19/06, B25J 17/00

(54) **MANIPULATOREINRICHTUNG SOWIE VERFAHREN ZUM BETREIBEN EINER MANIPULATOREINRICHTUNG**
MANIPULATOR DEVICE AND METHOD FOR OPERATING A MANIPULATOR DEVICE
DISPOSITIF MANIPULATEUR ET PROCÉDÉ POUR FAIRE FONCTIONNER UN DISPOSITIF MANIPULATEUR

(43) Veröffentlichungstag der Anmeldung: 29.09.2021
(73) Patentinhaber: M-Robot OHG, 37194 Wahlsburg (DE)
(72) Erfinder: Brissé, Dirk, 88079 Kressbronn (DE); Bartsch, Patrick, 88074 Meckenbeuren (DE)
(74) Vertreter: Schorr, Peter Karl

(56) Entgegenhaltungen:
- JP-A- 2012 218 139
- US-A1- 2016 263 752

## Beschreibung

Die Erfindung betrifft eine Manipulatoreinrichtung mit den Merkmalen des Oberbegriffes des Anspruchs 1 sowie ein Verfahren zum Betreiben einer derartigen Manipulatoreinrichtung.

Manipulatoreinrichtungen sowie Verfahren zum Betreiben von Manipulatoreinrichtungen sind aus dem Stand der Technik in unterschiedlichen Gestaltungsformen bekannt. Diese können beispielsweise einen Industrieroboter umfassen. Um den Betrieb einer als Industrieroboter ausgebildeten Manipulatoreinrichtung gegenüber einem Benutzer aufzuzeigen, ist es bekannt, die Manipulatoreinrichtung mit Anzeigemitteln zu versehen, die leuchten, wenn die Manipulatoreinrichtung in Betrieb ist.

Darüber hinaus sind als Werkzeugmaschinen ausgebildete Manipulatoreinrichtungen bekannt, bei denen Anzeigeeinheiten vorgesehen sind, durch die ein Antriebszustand der Maschine darstellbar ist. Diese Anzeigemittel umfassen Bildschirme oder Monitore, durch die beispielsweise Fehlfunktionen oder Störungen der Manipulatoreinrichtung anzeigbar sind. Bei bekannten Manipulatoreinrichtungen ist eine Anzeigeeinheit mehreren Komponenten der Manipulatoreinrichtung zugeordnet, wodurch ein schnelles Erfassen eines aktuell vorliegenden Problems erschwert ist.

Bei den bekannten Manipulatoreinrichtungen hat es sich ferner als umständlich und unzweckmäßig erwiesen, dass ein Antriebszustand mindestens eines Antriebsmittels der Antriebseinheit der Manipulatoreinrichtung auf einem Bildschirm der Manipulatoreinrichtung dargestellt wird. Hierdurch ist ein Erfassen von Störungen erschwert, insbesondere wenn eine Bedienperson mehrere Manipulatoreinrichtungen gleichzeitig beaufsichtigt.

Gattungsgemäße Manipulatoreinrichtungen sind bekannt aus JP 2012 218139 A, worin eine Manipulatoreinrichtung mit den Merkmalen des Oberbegriffs des Anspruch 1 offenbart ist, und US 2016/263752 A1.

Eine Aufgabe eines Ausführungsbeispiels der Erfindung ist, eine Manipulatoreinrichtung sowie ein Verfahren zum Betreiben einer derartigen Manipulatoreinrichtung vorzuschlagen, bei der das Erfassen eines Antriebszustands einer Antriebseinheit leicht erfassbar ist.

Diese Aufgabe wird gelöst durch eine Manipulatoreinrichtung gemäß Anspruch 1, bei der das Anzeigemittel der Anzeigeeinheit mehrere Leuchtelemente umfasst, die zueinander beabstandet oder aneinander angrenzend angeordnet sind und die durch die Steuereinheit zeitlich versetzt zum Emittieren von elektromagnetischen Wellen in mindestens einem Wellenlängen-Bereich anschaltbar oder wieder ausschaltbar sind.

Dadurch, dass die Manipulatoreinrichtung mindestens eine der Antriebseinheit funktional zuordenbare oder zugeordnete Anzeigeeinheit umfasst, die am Manipulatorarm und insbesondere im Bereich des Antriebsmittels der Antriebseinheit angeordnet ist, ist der Antriebszustand des mindestens einen Antriebsmittels übersichtlich und schnell erfassbar.

Das mindestens eine Antriebsmittel kann einen Elektromotor umfassen, der mindestens eine, insbesondere drei, Wicklungen umfasst und der durch ein Kühlmittel kühlbar ist.

Der Steuereinheit kann mindestens ein Sensormittel funktional zugeordnet sein, durch das eine Temperatur der mindestens einen Wicklung und/oder oder des Kühlmittels erfassbar ist. Durch das Erfassen der Temperatur der Wicklung und/oder des Kühlmittels kann der Antriebszustand des mindestens einen Antriebsmittels und/oder ein Leistungsbereich, in dem sich das mindestens einen Antriebsmittel befindet, erfasst werden.

Ferner kann der Antriebszustand des Antriebsmittels einen Service oder Wartungsaufforderung umfassen, wenn eine bestimmte Betriebsdauer erreicht oder überschritten ist und/oder wenn die Steuereinheit einen Wartungsfall erfasst.

Das Anzeigemittel der Anzeigeeinheit umfasst mindestens ein Leuchtelement, wie LED, durch das elektromagnetische Wellen mit unterschiedlichen Wellenlängen-Bereichen abstrahlbar ist, wobei mindestens ein Wellenlängen-Bereich mindestens einem Antriebszustand des mindestens einen Antriebsmittels durch die Steuereinheit zuordenbar ist.

Dadurch, dass das Anzeigemittel mindestens ein Leuchtelement umfasst, durch das elektromagnetische Wellen in unterschiedlichen Wellenlängen-Bereichen abstrahlbar ist, sind unterschiedliche Antriebszustände des mindestens einen Antriebsmittels leicht erfassbar.

Durch das Verwenden von leuchtimitierenden Dioden (LED) ist eine energiesparende Variante eines Anzeigemittels der Anzeigeeinheit zur Verfügung gestellt.

Bei den elektromagnetischen Wellen kann es sich Licht im sichtbaren Spektrum handeln. Unter Wellenlängen-Bereich wird verstanden, dass die elektromagnetischen Wellen, insbesondere das Licht im sehbaren Spektrum eine durch einen Benutzer erfassbare Farbe umfasst.

Dadurch, dass mehrere Leuchtelemente vorgesehen sind, ist zum einen die Anzeigefläche des Anzeigemittels der Anzeigeeinheit erhöht. Wenn die einzelnen Leuchtelemente durch die Steuereinheit zeitlich versetzt zueinander zum Imitieren von elektromagnetischen Wellen anschaltbar oder wieder ausschaltbar sind, kann eine Bewegung, beispielsweise des einen Armkörpers relativ zum anderen Armkörper simuliert werden. Darüber hinaus können die mehreren Leuchtelemente jeweils elektromagnetische Wellen im selben Wellenlängen-Bereich oder in voneinander abweichenden Wellenlängen-Bereichen abstrahlen. Hierdurch ist der durch das Anzeigemittel transportierbare Informationsgehalt weiter erhöht.

Bei einer Weiterbildung letztgenannter Ausführungsform erweist es sich als vorteilhaft, wenn eine Reihenfolge des zeitlich versetzten Anschaltens und Ausschaltens der mehreren Leuchtelemente korrespondierend zu einer Bewegungsrichtung der mindestens zwei Armkörper relativ zueinander ausgebildet ist.

Solchenfalls kann durch das Anzeigemittel der Anzeigeeinheit eine Relativbewegung des einen Armkörpers zum anderen Armkörper für eine Bedienperson ersichtlich sein.

Durch das Verwenden unterschiedlicher Wellenlängen-Bereichen kann zudem der Antriebszustand des Antriebsmittels, insbesondere dessen Leistung in Bezug zu einer Maximalleistung nach außen dargestellt werden. So können beispielsweise unkritische Leistungsbereiche bis 70% der Maximalleistung in einem Grünfarbton dargestellt werden. Eine IST-Leistung im Bereich von 70% bis 80% der Maximalleistung kann beispielsweise in einem Gelbton dargestellt werden. Ein Antriebszustand in einem Leistungsbereich zwischen 80-90% der Maximalleistung kann beispielsweise in einem Orangeton dargestellt werden. Ein Antriebszustand in einem Leistungsbereich von > 90% der Maximalleistung kann beispielsweise in einem Rotton dargestellt werden.

Hierdurch ist einer Bedienperson von außen unmittelbar ersichtlich, ob einzelne Komponenten, insbesondere einzelne Antriebsmittel überlastet sind.

Ferner kann bei Inbetriebnahme der Manipulatoreinrichtung durch das mindestens eine Anzeigemittel angezeigt werden, ob das jeweilige Antriebsmittel sicherheitstechnisch bereit oder nicht bereit ist.

Solchenfalls kann eine sicherheitstechnische Bereitschaft in einem Grünfarbton dargestellt werden und eine fehlende sicherheitstechnische Bereitschaft in einem Rotfarbton.

Bei einer Ausführungsform der Manipulatoreinrichtung ist vorgesehen, dass die Steuereinheit einen Motorregler umfasst und/oder dass das Anzeigemittel der Anzeigeeinheit mindestens einen LED-Streifen umfasst, dessen einzelne, jeweils ein Leuchtelement bildende LED durch die Steuereinheit addressierbar und/oder ansteuerbar ist.

Um die Anzeigeeinheit mit Energie zu versorgen, sind bei Ausführungsbeispielen der Manipulatoreinrichtungen vorgesehen, dass die Anzeigeeinheit durch eine Komponente der Antriebseinheit mit elektrischer Energie versorgbar ist und/oder dass die Anzeigeeinheit ein Energieversorgungsmittel umfasst, durch die die Anzeigeeinheit mit elektrischer Energie versorgbar ist.

Wenn die Anzeigeeinheit durch eine Komponente der Antriebseinheit mit elektrischer Energie versorgbar ist, kann die Manipulatoreinrichtung kompakt und bauteilreduziert ausgebildet werden. Wenn die Anzeigeeinheit ein Energieversorgungsmittel umfasst, das von einer Komponente der Antriebseinheit unabhängig und separat ausgebildet ist, ist die Antriebseinheit auch mit Energie versorgbar, wenn die Antriebseinheit ausfällt. Hierdurch ist ein Fehler nach außen anzeigbar, auch wenn die Antriebseinheit unbestromt ist.

Die beiden Armkörper können grundsätzlich beliebig relativ zueinander bewegt und festgelegt werden. Beispielsweise können die beiden Armkörper ineinander teleskopiert werden. Bei einer Ausführungsform der Manipulatoreinrichtung ist mindestens ein zwischen jeweils zwei Armkörpern angeordnetes Gelenk vorgesehen, durch das die beiden Armkörper relativ zueinander um eine Dreh- oder Schwenkachse drehbar sind, wobei das mindestens eine Anzeigemittel der Anzeigeeinheit im Bereich des Gelenks anordenbar oder angeordnet sind angeordnet und/oder wobei die beiden Armkörper dem Gelenk zuordenbar oder zugeordnet ist und um eine parallel zur Dreh- oder Schwenkachse des Gelenks, insbesondere mit dieser fluchtend, verlaufende Antriebsachse relativ zueinander drehbar und relativ zueinander festlegbar sind.

Die Dreh- und/oder Schwenkachse kann parallel zu einer Längserstreckungsrichtung der Armkörper verlaufen oder schräg oder quer hierzu.

Beispielsweise kann einer der Armkörper als Sockel ausgebildet sein, um den der mit in dem Sockel verbundene weiterer Armkörper um eine parallel zur Längserstreckungsausrichtung des weiteren Armkörpers erstreckten Dreh- oder Schwenkachse drehbar ist.

Darüber hinaus ist es denkbar, dass die Dreh- und/oder Schwenkachse quer zur Längserstreckungsrichtung der beiden Armkörper angeordnet ist.

Bei einer Weiterbildung letztgenannter Ausführungsform erweist es sich als vorteilhaft, wenn die Leuchtelemente des Anzeigemittel ring- oder kranzartig am Gelenk anordenbar oder angeordnet sind, insbesondere konzentrisch zur Dreh- oder Schwenkachse des Gelenks verlaufend anordenbar oder angeordnet sind.

Hierdurch ist insbesondere das Anzeigen einer Bewegungsrichtung des Antriebsmittels durch das Anzeigemittel erleichtert. Beim Drehen des Gelenks werden solchenfalls die Leuchtelemente des Anzeigemittels zeitlich zueinander versetzt entsprechend der Drehrichtung des Gelenks zum Leuchten angeschaltet oder ausgeschaltet.

Das Antriebsmittel der Antriebseinheit kann grundsätzlich ein beliebiges Antriebsmittel umfassen. Beispielsweise kann es ein mechanisches, pneumatisches, hydraulisches oder elektrisches Antriebsmittel umfassen. Es erweist sich als vorteilhaft, wenn das Antriebsmittel der Antriebseinheit auf einen elektromagnetischen Antrieb, insbesondere einen Direktantrieb, umfasst. Dieser elektromagnetische Antrieb kann drehfest an einem der beiden Armkörper angeordneten Stator und mindestens einen drehfest an dem weiteren der beiden Armkörper angeordneten Rotor aufweisen, in dem eine parallel zur Dreh- und/oder Schwenkachse des Gelenks, insbesondere mit dieser fluchtend verlaufend relativ zueinander drehbar und relativ zueinander festlegbar sind.

Die Antriebsachse des Antriebsmittel kann hierbei im Wesentlichen quer zur Längserstreckungsrichtung des einen Armkörpers und/oder des weiteren Armkörpers verlaufen oder schräg oder parallel hierzu.

Wenn das Antriebsmittel ein elektromagnetisches Antriebsmittel, insbesondere einen Direktantrieb umfasst, kann die Steuereinheit beispielsweise einen Absolutwertgeber umfassen. Hierdurch sind Stator und Rotor in diskreten Positionen zueinander einstellbar.

Die Manipulatoreinrichtung kann mehrere Armkörper umfassen. Hierbei erweist es sich als vorteilhaft, wenn der Manipulatorarm mehrachsig ausgebildet ist und der mindestens eine der beiden Armkörper einen n-ten Armkörper und der weitere der beiden Armkörper einen (n+1)-ten Armkörper umfasst, wobei der (n+1)-te Armkörper um ein n-tes Gelenk mit einer n-ten Dreh- oder Schwenkachse drehbar festgelegt ist und/oder am n-ten Gelenk mindestens ein, insbesondere elektromagnetisches Antriebsmittel einer n-ten Antriebseinheit anordenbar oder angeordnet ist.

Ferner kann vorgesehen sein, dass ein erster Armkörper ein an einem Sockel um eine erste Dreh- oder Schwenkachse umfassendes erstes Gelenk drehbar festgelegt ist, ein zweiter Armkörper am ersten Armkörper um ein eine zweite Dreh- oder Schwenkachse umfassendes zweites Gelenk drehbar festgelegt, ein dritter Armkörper am zweiten Armkörper um ein eine dritte Dreh- oder Schwenkachse umfassendes drittes Gelenk drehbar festgelegt, ein vierter Armkörper am dritten Armkörper um ein eine vierte Dreh- oder Schwenkachse umfassendes viertes Gelenk drehbar festgelegt und ein fünfter Armkörper am vierten Armkörper um ein eine fünfte Dreh- oder Schwenkachse umfassendes fünftes Gelenk drehbar festgelegt ist, wobei zumindest am zweiten Gelenk, dritten Gelenk und/oder fünften Gelenk eine der mindestens einen Antriebseinheit mit mindestens einem elektromagnetischen Antriebsmittel anordenbar oder angeordnet ist.

Darüber hinaus wird die Aufgabe gelöst durch ein Verfahren gemäß Anspruch 7 zum Betreiben einer Manipulatoreinrichtung, wie Industrieroboter, mit mindestens einem der zuvor genannten Merkmalen mit den Schritten:
a. Erfassen eines eine IST-Leistung umfassenden Antriebszustands mindestens eines Antriebsmittels der Antriebseinheit durch die Steuereinheit;
b. Ansteuern mindestens eines Leuchtelements eines Anzeigemittels der Anzeigeeinheit durch die Steuereinheit derart, dass das mindestens eine Leuchtelement:
   i. elektromagnetische Wellen im sichtbaren grünen oder blauen Wellenlängen-Bereich abstrahlt, wenn die erfasste IST-Leistung des dem Anzeigemittel zugeordneten Antriebsmittel kleiner 70 % einer Maximalleistung des Antriebsmittel ist;
   ii. elektromagnetische Wellen im sichtbaren gelben Wellenlängen-Bereich abstrahlt, wenn die erfasste IST-Leistung des dem Anzeigemittel zugeordneten Antriebsmittel zwischen 70 % und 80 % der Maximalleistung des Antriebsmittel ist;
   iii. elektromagnetische Wellen im sichtbaren orangen Wellenlängen-Bereich abstrahlt, wenn die erfasste IST-Leistung des dem Anzeigemittel zugeordneten Antriebsmittel zwischen 80 % und 90 % der Maximalleistung des Antriebsmittel ist; und
   iv. elektromagnetische Wellen im sichtbaren roten Wellenlängen-Bereich abstrahlt, wenn die erfasste IST-Leistung des dem Anzeigemittel zugeordneten Antriebsmittel größer 90 % der Maximalleistung des Antriebsmittel ist.

Bei einer Weiterbildung des Verfahrens sind nachfolgende Schritte vorgesehen:
a. Erfassen einer Bewegungsrichtung der beiden Armkörper relativ zueinander durch die Steuereinheit;
b. zeitlich versetztes Anschalten und/oder Ausschalten der mehreren Leuchtelemente durch die Steuereinheit korrespondierend zur erfassten Bewegungsrichtung der mindestens zwei Armkörper relativ zueinander.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Manipulatoreinrichtung und des Verfahrens.

In der Zeichnung zeigt:

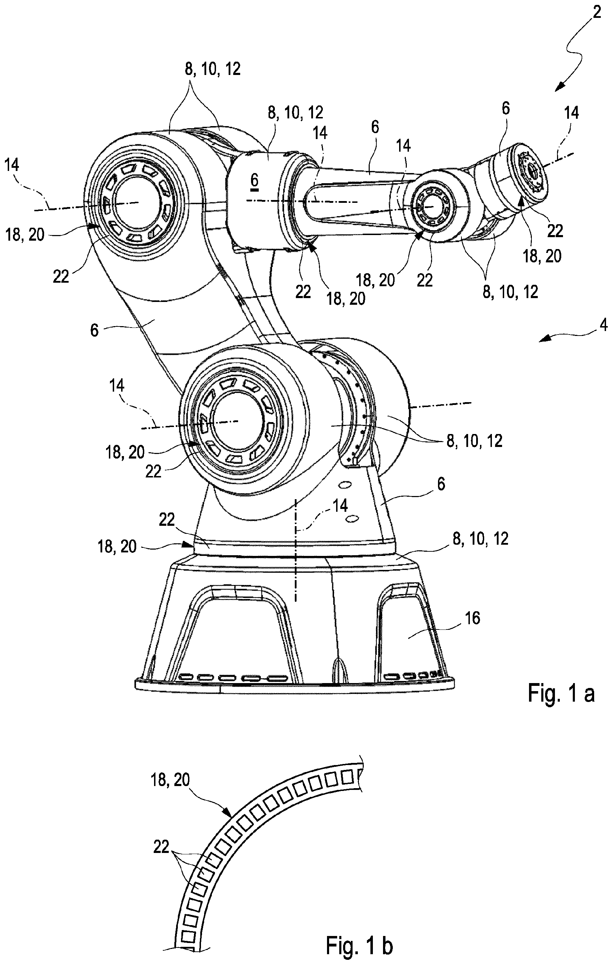

- Figur 1a: Eine perspektivische Seitenansicht auf ein Ausführungsbeispiel der Manipulatoreinrichtung;
- Figur 1: b Eine Detailansicht eines Anzeigemittels gemäaß Figur 1;
- Figur 2: Ein schematisches Ablaufdiagramm eines Ausführungsbeispiels eines erfindungsgemäßen Verfahrens.

Figur 1a zeigt ein Ausführungsbeispiel einer insgesamt mit dem Bezugszeichen 2 versehenen Manipulatoreinrichtung. Diese umfasst bei den in Figur 1a gezeigten Ausführungsbeispiel einen Industrieroboter, durch den Kräfte und Momente einer Last aufnehmbar sind. Die Manipulatoreinrichtung 2 umfasst einen Manipulatorarm 4, der mehrere, relativ zueinander bewegliche Armkörper 6 aufweist. Darüber hinaus umfasst die Manipulatoreinrichtung 2 eine Antriebseinheit 8, die bei dem in Figur 1a gezeigten Ausführungsbeispiel mehrere Antriebsmittel 10 umfasst, welche innerhalb der Armkörper 6 angeordnet sind.

Bei den in Figur 1a gezeigten Ausführungsbeispiel sind die Antriebsmittel 10 als elektromagnetische Antriebsmittel 10, insbesondere Direktantriebe ausgebildet, die an einem jeweils zwischen zwei Armkörpern 6 gebildeten Gelenken 12 angeordnet sind, durch die die beiden Armkörper 6 relativ zueinander um jeweils eine Dreh- oder Schwenkachse 14 drehbar sind. Durch die Antriebsmittel 10 sind die Armkörper 6 relativ zueinander bewegbar antreibbar. Ferner umfasst die Manipulatoreinrichtung 2 eine Steuereinheit 16, durch die mindestens ein Antriebszustand mindestens eines Antriebsmittels 10 der Antriebseinheit 8 erfassbar ist.

Figur 1a zeigt ein Ausführungsbeispiel der Manipulatoreinrichtung 2, bei dem die Manipulatoreinrichtung 2 eine Anzeigeeinheit 18 umfasst, die der Antriebseinheit 8 funktional zugeordnet ist und die mindestens ein Anzeigemittel 20 umfasst, das am oder im Manipulatorarm 4, insbesondere im Bereich eines Gelenks 12, angeordnet ist und durch das der Antriebszustand des mindestens einen Antriebsmittels 10 darstellbar ist.

Die Anzeigemittel 20 umfassen bei den in Figur 1a gezeigten Ausführungsbeispiel eine Vielzahl von Leuchtelementen 22, die durch LED gebildet sind. Figur 1b zeigt hiervon eine Detailansicht. Durch die Leuchtelemente 22 sind elektromagnetische Wellen, insbesondere Licht im sichtbaren Spektrum, in unterschiedlichen Längenwellen-Bereichen abstrahlbar. Hierdurch lassen sich durch die Leuchtelemente 22 beispielsweise Licht im grünen, blauen, gelben, orangen und roten sichtbaren Spektrum abstrahlen.

Die mehreren Leuchtelemente 22 sind bei dem in den Figuren 1a und 1b gezeigten Ausführungsbeispiel konzentrisch zur Dreh- oder Schwenkachse 14 angeordnet und umgeben die Dreh- oder Schwenkachse 14 ringförmig. Die einzelnen Leuchtelemente 22 sind durch die Steuereinheit 16 gleichzeitig oder zeitlich versetzt zueinander zum Imitieren von elektromagnetischen Wellen in den Wellenlängen-Bereichen ausschaltbar oder wieder anschaltbar. Hierdurch ist es ermöglicht, einen Drehsinn des jeweiligen Gelenks 12, an dem das jeweilige Anzeigemittel 20 angeordnet ist, durch die Leuchtelemente 22 zu visualisieren.

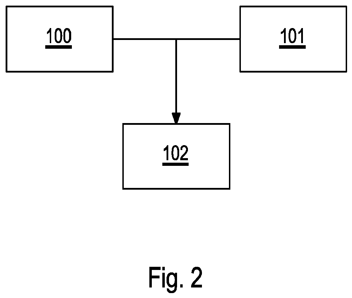

Figur 2 zeigt ein schematisches Ablaufdiagramm eines Ausführungsbeispiels eines erfindungsgemäßen Verfahrens. Unter Zuhilfenahme der in Figur 1a gezeigten Komponenten wird das Verfahren nachfolgend beschrieben:
In einem ersten Schritt 100 wird ein Antriebszustand mindestens eines Antriebsmittels 10 der Antriebseinheit 8 durch die Steuereinheit 16 erfasst.

In einem hieran anschließenden Schritt 102 wird mindestens ein Leuchtelement 22 des Anzeigemittels 20 der Anzeigeeinheit 18 durch die Steuereinheit 16 derart angesteuert, dass diese
- elektromagnetische Wellen im sichtbaren grünen oder blauen Wellenlängen-Bereich abstrahlt, wenn die erfasste IST-Leistung des dem Anzeigemittel 20 zugeordneten Antriebsmittels 10 < 70% einer Maximalleistung des Antriebsmittels 10 ist,
- elektromagnetische Wellen im sichtbaren gelben Wellenlängen-Bereich abstrahlt, wenn die erfasste IST-Leistung des dem Anzeigemittel 20 zugeordneten Antriebsmittel 10 zwischen 70% und 80% der Maximalleistung des Antriebsmittels 10 ist,
- elektromagnetische Wellen im sichtbaren orangenen Wellenlängen-Bereich abstrahlt, wenn die erfasste IST-Leistung des dem Anzeigemittel 18 zugeordneten Antriebsmittels 10 zwischen 80% und 90% der Maximalleistung des Antriebsmittels 10 ist und
- elektromagnetische Wellen im sichtbaren roten Wellenlängen-Bereich abstrahlt, wenn die erfasste IST-Leistung des dem Anzeigemittel 18 zugeordneten Antriebsmittels 10 > 90% der Maximalleistung des Antriebsmittels 10 ist.

Hierdurch ist einem Bediener der Manipulatoreinrichtung 2 optisch darstellbar, welche der Antriebsmittel 10 der Manipulatoreinrichtung 2 in welchem Leistungsbereich arbeitet, insbesondere, welches Antriebsmittel 10 derzeit überlastet ist.

Dem Schritt 102 kann ein Schritt 101 vorausgehen oder parallelgeschaltet sein. In diesem Schritt 101 wird eine Bewegungsrichtung der beiden Armkörper 6 relativ zueinander durch die Steuereinheit 16 erfasst.

Auf Grundlage dieses Erfassens wird in dem Schritt 102 ein zeitlich versetztes Anschalten und/oder Ausschalten der mehreren Leuchtelemente 22 durch die Steuereinheit 16 korrespondierend zur erfassten Bewegungsrichtung der mindestens zwei Armkörper 6 relativ zueinander erzeugt. Hierdurch kann zusätzlich zur Leistungsanzeige des jeweiligen Antriebsmittels auch eine Bewegungsrichtung der jeweiligen Armkörper 6 relativ zueinander dargestellt werden.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen wesentlich sein.

### Bezugszeichenliste

- 2: Manipulatoreinrichtung
- 4: Manipulatorarm
- 6: Armkörper
- 8: Antriebseinheit
- 10: Antriebsmittel
- 12: Gelenk
- 14: Dreh- oder Schwenkachse
- 16: Steuereinheit
- 18: Anzeigeeinheit
- 20: Anzeigemittel
- 22: Leuchtelement

## Patentansprüche

1. Manipulatoreinrichtung (2), wie Industrieroboter, durch die Kräfte und Momente einer Last aufnehmbar sind, mit mindestens einem Manipulatorarm (4), der mindestens zwei relativ zueinander bewegbare Armkörper (6) aufweist, mit mindestens einer Antriebseinheit (8), die mindestens ein Antriebsmittel (10) umfasst, welches am oder im Manipulatorarm (4) anordenbar oder angeordnet ist und durch welches die Armkörper (6) relativ zueinander bewegbar antreibbar sind, mit mindestens einer Steuereinheit (16), durch die mindestens ein Antriebszustand des mindestens einen Antriebsmittels (10) der Antriebseinheit (8) erfassbar ist und mit mindestens einer der Antriebseinheit (8) funktional zuordenbaren oder zugeordneten Anzeigeeinheit (18), die mindestens ein Anzeigemittel (20) umfasst, das am oder im Manipulatorarm (4), insbesondere im Bereich des Antriebsmittels (10) der Antriebseinheit (8), angeordnet ist und durch das der Antriebszustand des mindestens einen Antriebsmittels (10) darstellbar ist, wobei das Anzeigemittel (20) der Anzeigeeinheit (18) mehrere Leuchtelemente (22) umfasst, die zueinander beabstandet oder aneinander angrenzend angeordnet sind und die durch die Steuereinheit (16) zeitlich versetzt zum Emittieren von elektromagnetischen Wellen in mindestens einem Wellenlängen-Bereich anschaltbar oder wieder ausschaltbar sind,
**dadurch gekennzeichnet, dass** das mindestens eine Anzeigemittel (20) der Anzeigeeinheit (18) mindestens ein Leuchtelement (22), wie LED, umfasst, durch das elektromagnetische Wellen mit unterschiedlichen Wellenlängen-Bereichen abstrahlbar ist, und wobei mindestens ein Wellenlängen-Bereich mindestens einem Antriebszustand des mindestens einen Antriebsmittels (10) durch die Steuereinheit (16) zuordenbar ist.

2. Manipulatoreinrichtung (2) nach Anspruch 1, **dadurch gekennzeichnet, dass** eine Reihenfolge des zeitlich versetzten Anschaltens und Ausschaltens der mehreren Leuchtelemente (22) korrespondierend zu einer Bewegungsrichtung der mindestens zwei Armkörper (6) relativ zueinander ausgebildet ist.

3. Manipulatoreinrichtung (2) nach einem der Ansprüche 1 oder 2, **dadurch gekennzeichnet, dass** die Steuereinheit (16) einen Motorregler umfasst und/oder dass das Anzeigemittel (20) der Anzeigeeinheit (18) mindestens einen LED-Streifen umfasst, dessen einzelne, jeweils ein Leuchtelement (22) bildende LED durch die Steuereinheit (16) adressierbar und/oder ansteuerbar ist.

4. Manipulatoreinrichtung (2) nach mindestens einem der vorhergehenden Ansprüche, **dadurch gekennzeichnet, dass** die Anzeigeeinheit (18) durch eine Komponente der Antriebseinheit (8) mit elektrischer Energie versorgbar ist und/oder dass die Anzeigeeinheit (18) ein Energieversorgungsmittel umfasst, durch die die Anzeigeeinheit (18) mit elektrischer Energie versorgbar ist.

5. Manipulatoreinrichtung (2) nach mindestens einem der vorhergehenden Ansprüche, **gekennzeichnet durch** mindestens ein zwischen jeweils zwei Armkörpern (6) angeordneten Gelenk (12), durch das die beiden Armkörper (6) relativ zueinander um eine Dreh- oder Schwenkachse (14) drehbar sind, wobei das mindestens eine Anzeigemittel (20) der Anzeigeeinheit (18) im Bereich des Gelenks (12) anordenbar oder angeordnet sind angeordnet und/oder wobei die beiden Armkörper (6) dem Gelenk (12) zuordenbar oder zugeordnet ist und um eine parallel zur Dreh- oder Schwenkachse (14) des Gelenks (12), insbesondere mit dieser fluchtend, verlaufende Antriebsachse relativ zueinander drehbar und relativ zueinander festlegbar sind.

6. Manipulatoreinrichtung (2) nach Anspruch 5, **dadurch gekennzeichnet, dass** die Leuchtelemente (22) des Anzeigemittels (20) ring- oder kranzartig am Gelenk (12) anordenbar oder angeordnet sind, insbesondere konzentrisch zur Dreh- oder Schwenkachse (14) des Gelenks (12) verlaufend anordenbar oder angeordnet sind.

7. Verfahren zum Betreiben einer Manipulatoreinrichtung (2), wie Industrieroboter, nach einem der Ansprüche 1 bis 6 mit den Schritten:
a. Erfassen eines eine IST-Leistung umfassenden Antriebszustands mindestens eines Antriebsmittels (10) der Antriebseinheit (8) durch die Steuereinheit (16);
b. Ansteuern mindestens eines Leuchtelements (22) eines Anzeigemittels (20) der Anzeigeeinheit (18) durch die Steuereinheit (16) derart, dass das mindestens eine Leuchtelement (22):
i. elektromagnetische Wellen im sichtbaren grünen oder blauen Wellenlängen-Bereich abstrahlt, wenn die erfasste IST-Leistung des dem Anzeigemittel (20) zugeordneten Antriebsmittels (10) kleiner 70 % einer Maximalleistung des Antriebsmittels (10) ist;
ii. elektromagnetische Wellen im sichtbaren gelben Wellenlängen-Bereich abstrahlt, wenn die erfasste IST-Leistung des dem Anzeigemittel (20) zugeordneten Antriebsmittel (10) zwischen 70 % und 80 % der Maximalleistung des Antriebsmittels (10) ist;
iii. elektromagnetische Wellen im sichtbaren orangen Wellenlängen-Bereich abstrahlt, wenn die erfasste IST-Leistung des dem Anzeigemittel (20) zugeordneten Antriebsmittel (10) zwischen 80 % und 90 % der Maximalleistung des Antriebsmittels (10) ist; und
iv. elektromagnetische Wellen im sichtbaren roten Wellenlängen-Bereich abstrahlt, wenn die erfasste IST-Leistung des dem Anzeigemittel (20) zugeordneten Antriebsmittel (10) größer 90 % der Maximalleistung des Antriebsmittels (10) ist.

8. Verfahren nach Anspruch 7, **gekennzeichnet durch** folgende Schritte:
a. Erfassen einer Bewegungsrichtung der beiden Armkörper (6) relativ zueinander durch die Steuereinheit (16);
b. zeitlich versetztes Anschalten und/oder Ausschalten der mehreren Leuchtelemente (22) durch die Steuereinheit (16) korrespondierend zur erfassten Bewegungsrichtung der mindestens zwei Armkörper (6) relativ zueinander.

## Claims

1. Manipulator device (2), such as an industrial robot, by which forces and moments of a load can be absorbed, with at least one manipulator arm (4), which has at least two arm bodies (6) movable relative to one another, with at least one drive unit (8), which comprises at least one drive means (10), which is assignable or assigned on or in the manipulator arm (4) and by means of which the arm bodies (6) can be driven such that they can be moved relative to one another, having at least one control unit (16) by means of which at least one drive state of the at least one drive means (10) of the drive unit (8) can be detected and with at least one display unit (18) which is functionally allocatable or allocated with the drive unit (8) and which comprises at least one display means (20), which is allocated on or in the manipulator arm (4), particularly in the area of the drive means (10) of the drive unit (8) and through which the drive state of the at least one drive means (10) can be indicated, whereby the display means (20) on the display unit (18) includes several lighting elements (22), which are allocated spaced apart or adjacent to one another and that can be switched on or switched off again by the control unit (16) with a time offset for emitting electromagnetic waves in at least one wavelength range, **characterised in** such a way that the at least one display means (20) of the display unit (18) includes at least one lighting element (22) such as LED, through which electromagnetic waves with different wavelength ranges can be emitted, and wherein at least one wavelength range can be allocated to at least one drive state of the at least one drive means (10) by the control unit (16).

2. Manipulator device (2) according to claim 1, **characterised in that** a sequence of the temporally staggered switching on and switching off of the several light elements (22) is designed to correspond to a direction of movement of the at least two arm bodies (6) relative to one another.

3. Manipulator device (2) according to one of claims 1 or 2, **characterised in that** the control unit (16) includes a motor controller and/or **in that** the display means (20) of the display unit (18) includes at least one LED strip, the individual LEDs of which, each forming a lighting element (22), can be addressed and/or controlled by the control unit (16).

4. Manipulator device (2) according to at least one of the preceding claims, **characterised in that** the display unit (18) can be supplied with electrical energy by a component of the drive unit (8) and/or **in that** the display unit (18) includes a power supply means by which the display unit (18) can be supplied with electrical energy.

5. Manipulator device (2) in accordance with at least one of the previous claims, **characterised by** at least one joint (12) assigned between two arm bodies (6) each, through which the two arm bodies (6) are rotatable relative to one another about a rotation or swivel axis (14), whereby the at least one display means (20) on the display unit (18) in the area of the joint (12) is assignable or assigned and/or whereby both arm bodies (6) are allocatable or allocated to the joint (12) and can be rotated relative to one another about a drive axis running parallel to the axis of rotation or swivel (14) of the joint (12), in particular in alignment with the latter, and can be fixed relative to one another.

6. Manipulation device (2) in accordance with claim 5, **characterised in** such a way that the lighting elements (22) on the display means (20) are assignable or assigned in a ring or crown on the joint (12), in particular assignable or assigned concentrically to the axis of rotation or swivel (14) of the joint (12).

7. Procedure for operating a manipulator device (2), such as an industrial robot, according to one of claims 1 to 6, comprising the steps:
a. Detection of a drive state comprising an ACTUAL power of at least one drive means (10) of the drive unit (8) by the control unit (16);
b. Control of at least one lighting element (22) of a display means (20) of the display unit (18) by the control unit (16) in such a way that the at least one lighting element (22):
i. emits electromagnetic waves in the visible green or blue wavelength range when the detected ACTUAL power of the drive means (10) associated with the display means (20) is less than 70% of a maximum power of the drive means (10);
ii. emits electromagnetic waves in the visible yellow wavelength range when the detected ACTUAL power of the drive means (10) associated with the display means (20) is between 70% and 80% of the maximum power of the drive means (10);
iii. emits electromagnetic waves in the visible orange wavelength range when the detected ACTUAL power of the drive means (10) associated with the display means (20) is between 80% and 90% of the maximum power of the drive means (10); and
iv. emits electromagnetic waves in the visible red wavelength range when the detected ACTUAL power of the drive means (10) associated with the display means (20) is greater than 90% of the maximum power of the drive means (10).

8. Method according to claim 7, **characterised by** the following steps:
a. Detection of a direction of movement of the two arm bodies (6) relative to each other by the control unit (16);
b. temporally staggered switching on and/or switching off of the several light elements (22) by the control unit (16) corresponding to the detected direction of movement of the at least two arm bodies (6) relative to one another.

## Revendications

1. Équipement de manipulation (2), de type robot industriel, permettant de supporter des forces et des couples d'une charge, avec au moins un bras manipulateur (4), présentant au moins deux corps de bras (6) mobiles l'un par rapport à l'autre, avec au moins une unité d'entraînement (8), comportant au moins un organe d'entraînement (10) pouvant être ou étant disposé sur ou dans le bras manipulateur (4) et par lequel les corps de bras (6) peuvent être entraînés de manière mobile les uns par rapport aux autres, avec au moins une unité de commande (16), par laquelle au moins un état d'entraînement d'au moins un organe d'entraînement (10) de l'unité d'entraînement (8) peut être détecté, et avec au moins une unité d'affichage (18) étant ou pouvant être associée fonctionnellement à l'unité d'entraînement (8), qui comprend au moins un moyen d'affichage (20) disposé sur ou dans le bras manipulateur (4), en particulier dans la zone de l'organe d'entraînement (10) de l'unité d'entraînement (8) et par lequel l'état d'entraînement d'au moins un organe d'entraînement (10) peut être représenté, le moyen d'affichage (20) de l'unité d'affichage (18) comprenant plusieurs éléments lumineux (22), espacés les uns des autres ou contigus et pouvant être activés ou désactivés par l'unité de commande (16) de manière temporellement différée pour l'émission d'ondes électromagnétiques dans au moins une plage de longueurs d'onde, **caractérisé par le fait qu'**au moins un moyen d'affichage (20) de l'unité d'affichage (18) comprend au moins un élément lumineux (22), tel qu'une LED, par lequel des ondes électromagnétiques de différentes plages de longueurs d'onde peuvent être émises, et compte tenu qu'au moins une plage de longueurs d'onde peut être attribuée à au moins un état d'entraînement d'au moins un organe d'entraînement (10) par l'unité de commande (16).

2. Équipement de manipulation (2) selon la revendication 1, **caractérisé par le fait qu'**une séquence d'allumage et d'extinction décalée dans le temps des nombreux éléments lumineux (22) est exécutée par rapport à une direction de déplacement d'au moins deux corps de bras (6) l'un par rapport à l'autre.

3. Équipement de manipulation (2) selon l'une des revendications 1 ou 2, **caractérisé par le fait que** l'unité de commande (16) comprend un régulateur de moteur et/ou que le moyen d'affichage (20) de l'unité d'affichage (18) comprend au moins une bande de LED dont chaque LED formant un élément lumineux (22) peut être adressée et/ou commandée par l'unité de commande (16).

4. Équipement de manipulation (2) selon au moins l'une des revendications précédentes, **caractérisé par le fait que** l'unité d'affichage (18) peut être alimentée en énergie électrique par un composant de l'unité d'entraînement (8) et/ou que l'unité d'affichage (18) comprend un moyen d'alimentation en énergie par lequel l'unité d'affichage (18) peut être alimentée en énergie électrique.

5. Équipement de manipulation (2) selon au moins l'une des revendications précédentes, **caractérisé par** la présence d'au moins une articulation (12) disposée entre deux corps de bras (6) respectifs, grâce à laquelle les deux corps de bras (6) peuvent tourner l'un par rapport à l'autre autour d'un axe de rotation ou de pivotement (14), étant donné qu'au moins un moyen d'affichage (20) de l'unité d'affichage (18) peut être disposé ou est disposé dans la zone de l'articulation (12) et/ou étant donné que les deux corps de bras (6) peuvent être associés ou sont associés à l'articulation (12) et peuvent tourner et être fixés l'un par rapport à l'autre autour d'un axe d'entraînement parallèlement à l'axe de rotation ou de pivotement (14) de l'articulation (12), en particulier aligné avec celui-ci.

6. Équipement de manipulation (2) selon la revendication 5, **caractérisé en ce que** les éléments lumineux (22) du moyen d'affichage (20) peuvent être disposés ou sont disposés sur l'articulation (12) à la manière d'un anneau ou d'une couronne, pouvant notamment être disposés ou étant disposés de manière concentrique par rapport à l'axe de rotation ou de pivotement (14) de l'articulation (12).

7. Procédure d'exploitation d'un équipement de manipulation (2), de type robot industriel, selon l'une des revendications 1 à 6, comprenant les étapes suivantes :
a. détection par l'unité de commande (16) d'un état d'entraînement comprenant une puissance RÉELLE d'au moins un organe d'entraînement (10) de l'unité d'entraînement (8) ;
b. commande d'au moins un élément lumineux (22) d'un moyen d'affichage (20) de l'unité d'affichage (18) par l'unité de commande (16) de telle sorte qu'au moins un élément lumineux (22) :
i. émet des ondes électromagnétiques dans la zone de longueur d'onde visible verte ou bleue, lorsque la puissance RÉELLE détectée de l'organe d'entraînement (10) associé au moyen d'affichage (20) est inférieure à 70 % d'une puissance maximale de l'organe d'entraînement (10) ;
ii. émet des ondes électromagnétiques dans la zone de longueur d'onde jaune visible, lorsque la puissance RÉELLE détectée de l'organe d'entraînement (10) associé au moyen d'affichage (20) est comprise entre 70 % et 80 % de la puissance maximale de l'organe d'entraînement (10) ;
iii. émet des ondes électromagnétiques dans la plage de longueurs d'onde orange visible lorsque la puissance RÉELLE détectée de l'organe d'entraînement (10) associé au moyen d'affichage (20) est comprise entre 80 % et 90 % de la puissance maximale de l'organe d'entraînement (10) ; et
iv. émet des ondes électromagnétiques dans la zone de longueur d'onde rouge visible lorsque la puissance RÉELLE détectée de l'organe d'entraînement (10) associé au moyen d'affichage (20) est supérieure à 90 % de la puissance maximale de l'organe d'entraînement (10).

8. Procédure selon la revendication 7, **caractérisée par** les étapes suivantes :
a. détection par l'unité de commande (16) d'une direction de mouvement des deux corps de bras (6) l'un par rapport à l'autre ;
b. allumage et/ou extinction décalés dans le temps des nombreux éléments d'éclairage (22) par l'unité de commande (16) en fonction de la direction de déplacement détectée d'au moins deux corps de bras (6) l'un par rapport à l'autre.
